Europäisches Patentamt

European Patent Office

Office européen des brevets

(19)

(11) Veröffentlichungsnummer: **0 421 281 A1**

# (12) EUROPÄISCHE PATENTANMELDUNG

(21) Anmeldenummer: 90118623.9

(22) Anmeldetag: 03.10.90

(51) Int. Cl.⁵: **B60B 35/10**, F16D 1/08

(30) Priorität: 03.10.89 US 416741

(43) Veröffentlichungstag der Anmeldung:
10.04.91 Patentblatt 91/15

(84) Benannte Vertragsstaaten:
DE GB

(71) Anmelder: DEERE & COMPANY
1 John Deere Road
Moline, Illinois 61265(US)

(72) Erfinder: Kittle, Carl Edwin
2312 Primrose
Cedar Falls, Iowa 50613(US)
Erfinder: Paxton, Dennis Lee
1303 W. 2nd Street
Cedar Falls, Iowa 50613(US)
Erfinder: Camacho, Abraham
720- 9th Street
Gilbertville, Iowa 50634(US)

(74) Vertreter: Feldmann, Bernhard et al
DEERE & COMPANY European Office Patent
Department Steubenstrasse 36-42
W-6800 Mannheim 1(DE)

(54) Vorrichtung zur Verstellung der Spurweite eines Fahrzeuges, insbesondere eines Ackerschleppers.

(57) Eine Vorrichtung zur Verstellung der Spurweite eines Fahrzeuges, insbesondere eines Ackerschleppers, weist mindestens ein auf einer Radachse (12) verstellbares Rad (8, 8'), eine Radnabe (10, 10') und eine konisch ausgebildete und geteilte Buchse (14, 14') auf, die auf der Radachse (12) axial verschiebbar ist und mit ihren konisch ausgebildeten Mantelflächen (14a, 14b, 14a', 14b') in die entsprechend ausgebildete Bohrung der Radnabe (10, 10') derart einschiebbar ist, daß zwischen Radnabe (10, 10') und Radachse (12) eine reibschlüssige Klemmverbindung entsteht, wobei mit der Buchse (14, 14') eine wenigstens eine Einstellbohrung (54, 56) aufweisende Platte (32) verbunden und eine parallel oder im wesentlichen parallel zur Radachse (12) verlaufende Einstellschraube (60) vorgesehen ist, die einenends mit der Platte (32) über deren Einstellbohrung (54, 56) drehbar und axial im wesentlichen unverschiebbar verbunden und anderenends in einen mit der Radachse (12) verbindbaren Radialteil einschraubbar ist.

Fig. 5

# VORRICHTUNG ZUR VERSTELLUNG DER SPURWEITE EINES FAHRZEUGES, INSBESONDERE EINES AK-KERSCHLEPPERS

Die Erfindung bezieht sich auf eine Vorrichtung zur Verstellung der Spurweite eines Fahrzeuges, insbesondere eines Ackerschleppers, mit mindestens einem auf einer Radachse verstellbaren Rad, einer Radnabe und einer konisch ausgebildeten und geteilten Buchse, die auf der Radachse axial verschiebbar ist und mit ihren konisch ausgebildeten Mantelflächen in die entsprechend ausgebildete Bohrung der Radnabe derart einschiebbar ist, daß zwischen Radnabe und Radachse eine reibschlüssige Klemmverbindung entsteht.

Bei dieser Vorrichtung (US-A-2 726 106) sind in die Stirnseite der Radnabe mit Gewinde versehene Befestigungslöcher eingearbeitet, in die durch Befestigungsbohrungen in Flanschteilen der Buchse gesteckte Befestigungsschrauben eingeschraubt werden. Durch Anziehen der Befestigungsschrauben werden die konischen Mantelflächen der geteilt ausgebildeten Buchse in die Radnabe hineingezogen, und es entsteht eine reibschlüssige Klemmverbindung der Radnabe mit der Radachse. Zum Lösen dieser Klemmverbindung werden die Befestigungsschrauben gelockert, aber in der Regel nicht aus ihren Befestigungslöchern herausgedreht. Danach werden Löseschrauben angezogen, die in in die Flanschteile eingearbeitete Lösebohrungen eingeschraubt sind und mit ihren Schaftenden gegen die Stirnseite der Radnabe anliegen. Durch das Anziehen der Löseschrauben wird die konische Buchse wieder aus der Bohrung der Radnabe herausgezogen. Die Klemmverbindung ist aufgehoben, und das Rad läßt sich auf seiner Radachse axial verstellen. Eine Verstellung ist in den meisten Fällen ohne Hilfsmittel schwerlich durchzuführen, weshalb hierzu bereits vorgeschlagen wurde, die Radachse mit einer Zahnstange zu versehen, auf der ein mit der Radnabe verbundenes Ritzel oder dergleichen abläuft (US-A-2 676 849).

Die mit der Erfindung zu lösende Aufgabe wird in einer möglichst einfachen und kostengünstigen Verstellvorrichtung gesehen. Diese Aufgabe ist nach der Erfindung dadurch gelöst worden, daß mit der Buchse eine wenigstens eine Einstellbohrung aufweisende Platte verbunden und eine parallel oder im wesentlichen parallel zur Radachse verlaufende Einstellschraube vorgesehen ist, die einenends mit der Platte über deren Einstellbohrung drehbar und axial im wesentlichen unverschiebbar verbunden und anderenends in einen mit der Radachse verbindbaren Radialteil einschraubbar ist. Auf diese Weise braucht nach dem Lockern der Befestigungsschrauben und dem Anziehen der Löseschrauben nur noch an der Einstellschraube in der einen oder anderen Drehrichtung gedreht zu werden, wobei sich das Rad auf seiner Radachse in der gewünschten Richtung verschiebt. Die Verstellvorrichtung selbst benötigt wenige weitere Teile, wobei die flache Platte, die äußerst billig herzustellen ist, als ein Hauptbestandteil angesehen werden kann. Die Verstellvorrichtung benutzt die sowieso zur Spurweitenverstellung am Rad vorgesehenen Bohrungen, um die Zahl der notwendigen Änderungen möglichst klein zu halten.

Nach einem weiteren Vorschlag der Erfindung kann auch die Platte Löseelemente zum Herausziehen der konisch ausgebildeten Buchse aus der Bohrung der Radnabe aufweisen. Diese Löseelemente sind dann nicht mehr in den Ringflansch der geteilten Buchse eingeschraubt. Im einzelnen ist hierzu erfindungsgemäß vorgesehen, daß die Platte mit wenigstens einer Innengewinde aufweisenden Lösebohrung zur Aufnahme einer Löseschraube versehen ist, die derart in der Platte angeordnet ist, daß die Löseschraube an der konischen Buchse vorbeigeführt ist. Hierzu ist die Platte natürlich entsprechend breit auszuführen, d. h. ihre Breite ist im Zweifel breiter als der Außendurchmesser des Ringflansches der Buchse.

Zweckmäßig ist die Platte mit zwei Lösebohrungen versehen, und jede Löseschraube ist gegen Herausdrehen aus ihrer Lösebohrung gesichert. Als Sicherung kann eine gegen eine Schulter der Löseschraube anliegende und durch einen Splint gesicherte Scheibe dienen.

Damit das Rad bei Drehung der Einstellschraube in der einen oder anderen Drehrichtung leicht auf seiner Radachse verschoben werden kann, ist erfindungsgemäß ferner vorgesehen, daß die Einstellschraube an ihrem durch die Einstellbohrung geführten Ende mit einer Schulter versehen ist, gegen die eine Scheibe, die an einer Seite der Platte vorgesehen ist, anliegt, wobei an der anderen Seite der Platte auf der Einstellschraube eine weitere über eine Mutter gesicherte Scheibe und zwischen beiden Scheiben ein sich durch die Einstellbohrung erstreckender Abstandshalter vorgesehen ist.

Damit sich die Mutter beim Drehen der Einstellschraube nicht aufdreht, kann die Einstellschraube mit gegenläufigen Gewinden versehen sein.

Zweckmäßig ist nach der Erfindung außerdem noch vorgesehen, daß die Platte mit der konischen Buchse verschraubt ist und zwischen Platte und Buchse auf den Feststellschrauben Abstandshalter vorgesehen sind. Die zum Verschrauben vorgesehenen Feststellschrauben werden einfach in die in den Flanschteilen vorgesehenen Lösebohrungen eingeschraubt. Zusätzliche Gewindebohrungen in der Buchse sind nicht erforderlich.

Vorteilhaft kann die konische Buchse mit der Radnabe über in letztere einschraubbare Befestigungsschrauben verklemmbar sein und die Platte mindestens eine Bohrung mit großem Durchmesser aufweisen, um den Zugang zu dem Kopf einer Befestigungsschraube zu erleichtern. Auch diese Maßnahmen zeigen, daß nur entsprechende Vorkehrungen an der Platte zu treffen sind und keine dagegen an der Buchse oder Radnabe.

Die Verstellvorrichtung für die Spurweite kann in gleicher Weise auch bei einer Zwillingsbereifung Verwendung finden. Sie kann in einem solchen Falle sogar noch einfacher ausgebildet sein, da dann der Radialteil die Radnabe des zweiten Rades ist. Die Einstellschraube wird dazu in ein Gewindeloch eingeschraubt, das normalerweise zur Befestigung der Radfelge dient. Gegebenenfalls ist eine weitere Einstellbohrung in der Platte vorzusehen.

Bei einer Einfachbereifung dagegen ist nach der Erfindung vorgesehen, daß der Radialteil als mit der Stirnseite der Radachse verschraubter Ausleger ausgebildet ist, der an seinem oberen Ende eine mit Gewinde versehene Einstellbohrung für die Einstellschraube aufweist. Bei dieser Ausführung muß allerdings in der Stirnseite der Radachse eine Gewindebohrung eingearbeitet werden, die einzige Änderung an den am Rad sowieso vorhandenen Teilen.

Im ganzen ist festzustellen, daß die Zahl der für die Verstellung des Rades benötigten Einzelteile äußerst gering ist. Bis auf die Platte können im Handel erhältliche Teile verwendet werden. Änderungen am Fahrzeug selbst sind nur bei einer Einzelradverstellung nötig, da dann eine Bohrung in der Stirnseite der Radachse vorgesehen werden muß. Bei Doppelrädern ist dies bereits nicht mehr erforderlich. Das Gewinde der Einstellschraube hat natürlich eine kleine Steigung, damit die Kräfte zum Verstellen des Rades gering sind.

In der Zeichnung ist ein nachfolgend näher erläutertes Ausführungsbeispiel der Erfindung dargestellt. Es zeigt:

Fig. 1 eine Radachse mit einer Befestigungsvorrichtung für eine Radnabe,

Fig. 2 die Radachse mit Radnabe nach Fig. 1 in Seitenansicht mit einer Verschiebeeinrichtung,

Fig. 3 einen Schnitt nach der Linie 3 - 3 in Fig. 2,

Fig. 4 eine ähnliche Darstellung wie in Fig. 2, jedoch die Radnabe eines inneren Rades eines Doppelrades zeigend und

Fig. 5 einen Schnitt nach der Linie 5 - 5 in Fig. 4.

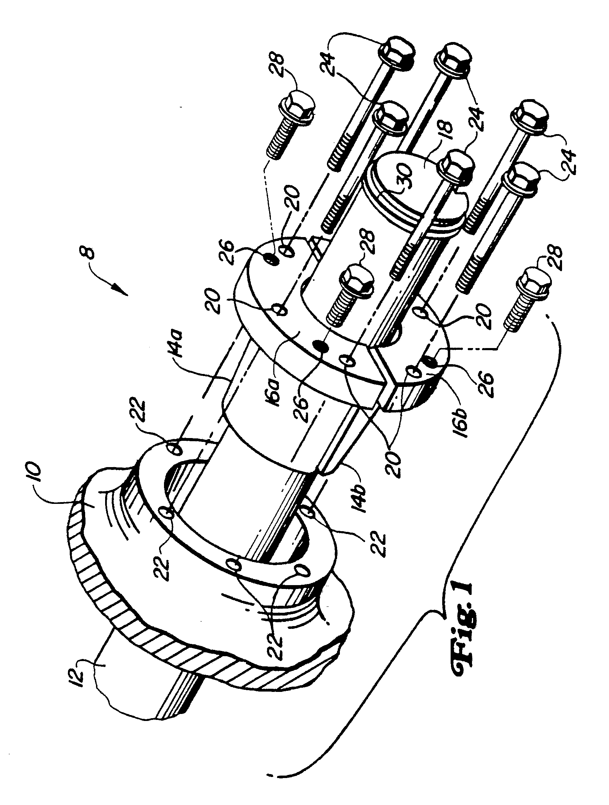

Fig. 1 zeigt in vereinfachter Form einen Radtyp, der bei der vorliegenden Erfindung Verwendung finden kann. Im einzelnen ist ein Rad 8 mit einer Radnabe 10 versehen, die auf einer Radachse 12 in verschiedenen Längspositionen drehfest festgesetzt werden kann. Das Rad 8 gehört zu einem Kraftfahrzeug, wie einem Ackerschlepper, dessen Spurweite zur Anpassung an die verschiedensten Arbeitsbedingungen verstellt werden kann. Zum Festsetzen der Radnabe 10 auf der Radachse 12 dient eine geteilt ausgebildete Buchse 14 mit konisch verlaufenden Mantelteilen 14a und 14b, die so ausgebildet ist, daß sie zwischen Radnabe und Radachse paßt bzw. in die Radnabe eingezogen wird und dabei eine Klemmverbindung zwischen Radnabe und Radachse in Form eines Reibsitzes herbeiführt.

Verschiedene Schrauben und Flansche sind vorgesehen, um einen Eingriff der Buchse 14 mit der Radnabe 10 und der Radachse 12 herzustellen oder um diesen Eingriff wieder zu lösen. Jede konisch verlaufende Mantelfläche 14a und 14b der Buchse 14 ist an ihrem einen Ende, das dem Ende 18 der Radachse 12 zugelegen ist, mit je einem sich radial ersteckenden Flanschteil 16a und 16b versehen, die beide eine Vielzahl von Befestigungsbohrungen 20 aufweisen. Die Befestigungsbohrungen 20 sind zu Befestigungsgewindelöchern 22 in der Radnabe 10 ausgerichtet. Eine Klemmverbindung erfolgt dann über Befestigungsschrauben 24, die durch die Befestigungsbohrungen 20 gesteckt und in die Befestigungsgewindelöcher 22 eingeschraubt werden. Durch Anziehen der Befestigungsschrauben 24 verklemmt sich die konisch verlaufende Buchse 14 mit der Radnabe 10 und der Radachse 12. Des weiteren weist jeder Flanschteil 15a und 16b noch je zwei mit Gewinde versehene Lösebohrungen 26 zur Aufnahme von Löseschrauben 28 auf, die auf eine plane Ringfläche an der Radnabe 10 auftreffen, wenn sie in die Lösebohrungen 26 hineingeschraubt werden. Nach dem Lösen oder nur dem Lockern der Befestigungsschrauben 24 kann die Klemmverbindung der Buchse 14 mit der Radnabe 10 und der Radachse 12 durch weiteres Anziehen der Löseschrauben 28 gelöst werden. Schließlich ist noch ein Verschlußring 30 nahe dem Ende 18 der Radachse 12 vorgesehen, der verhindern soll, daß sich das Rad 8 unbeabsichtigt von der Radachse 12 löst.

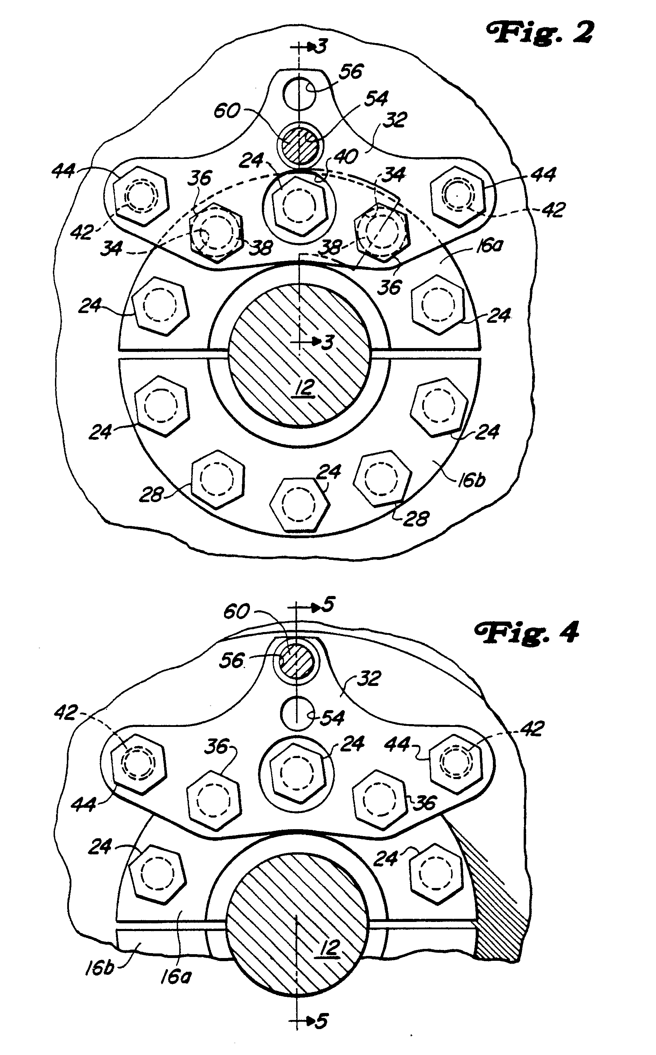

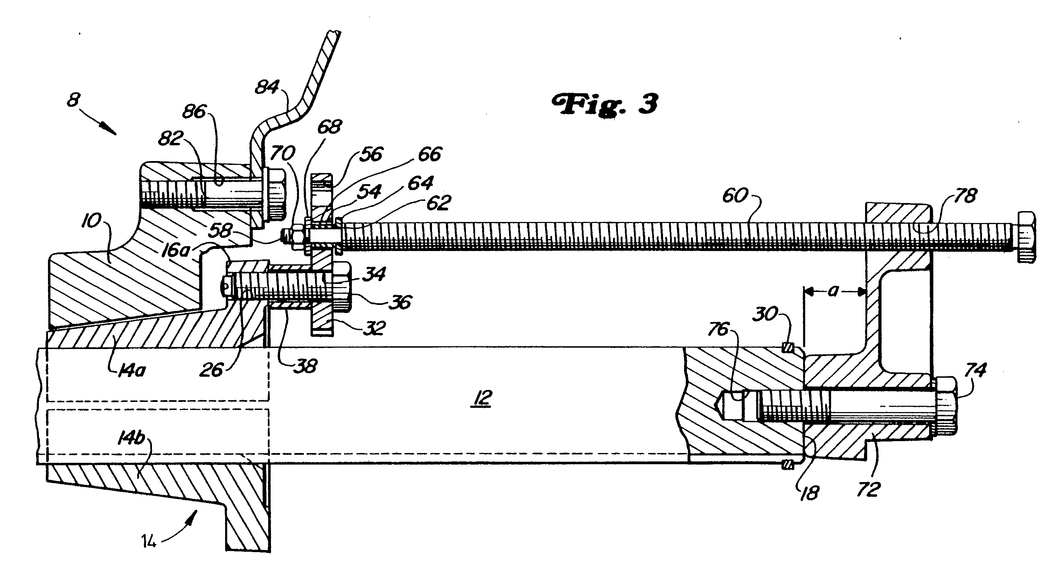

Die Figuren 2 und 3 verdeutlichen nun, wie die vorliegende Erfindung mit der Ausführung nach Fig. 1 verknüpft ist. Ein nicht unwesentlicher Bestandteil der vorliegenden Erfindung wird durch eine Platte 32 gebildet, die, wie nachfolgend noch zu beschreiben ist, mit einer Vielzahl von Bohrungen versehen und mit der Mantelfläche 14a der geteilten Buchse 14 bzw. deren Flanschteil 16a verbindbar ist. Befestigungslöcher 34 in der Platte 32 sind zu den mit Gewinde versehenen Lösebohrungen 26 in dem Flanschteil 16a ausgerichtet. Zu der gegenseitigen Verbindung werden die in Fig. 1 dargestellten Löseschrauben 28 entfernt und durch Feststellschrauben 36 ersetzt, die durch die Befestigungslöcher 34 und Abstandshalter 38 gesteckt in die Lösebohrungen 26 eingeschraubt werden. Die Abstandshalter 38 befinden sich zwischen der Platte 32 und dem Flanschteil 16a, um zwischen beiden Teilen einen entsprechenden Abstand zu halten. Natürlich können auch die Originallöseschrauben 28 Verwendung finden, wenn dies gewünscht ist und der gewählte Abstand dieses erlaubt. Zwischen den Befestigungslöchern 34 ist in der Platte 32 eine Bohrung 40 größeren Durchmessers vorgesehen. Sie ist zu der mittigen Befestigungsschraube 24 ausgerichtet und ermöglicht einen ungehinderten Zugang zu deren Schraubenkopf. Vorzugsweise ist der Durchmesser der Bohrung 40 derart groß, daß der Stecker eines entsprechenden Werkzeuges leicht hindurchgesteckt werden kann.

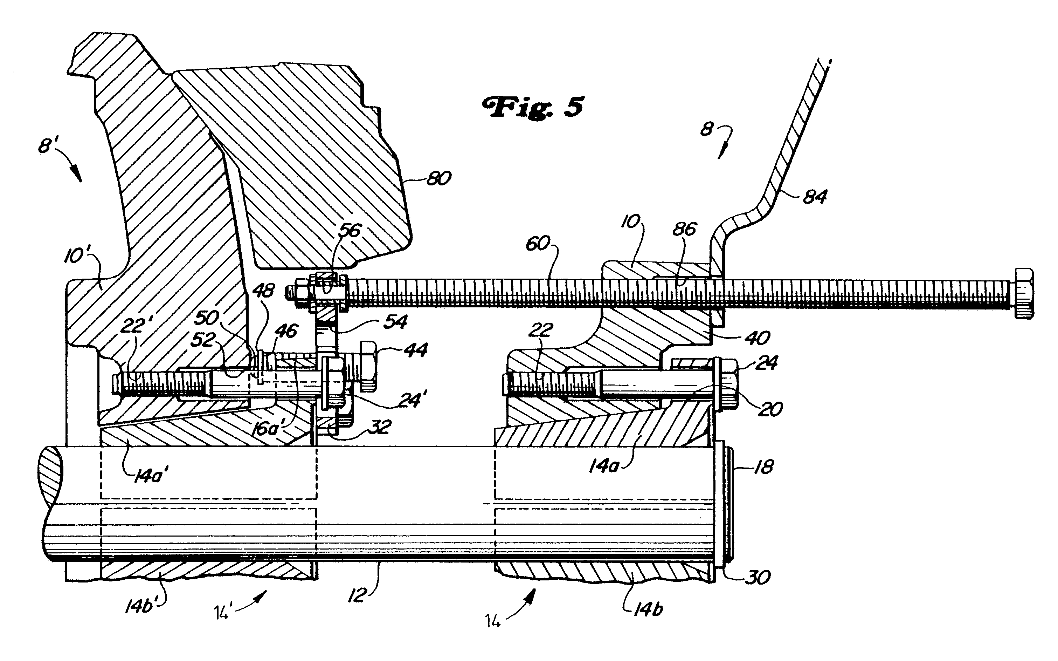

Aus der Fig. 2 sind die Lagen der Befestigungslöcher 34 für die Feststellschrauben 36 und die Lage der Bohrung 40 leicht ersichtlich. Ebenso sind in Fig. 2 noch zwei mit Gewinde versehene Lösebohrungen 42 zu erkennen, die derart an der Platte 32 zu liegen kommen, daß in sie einschraubbare Löseschrauben 44 nicht notwendigerweise auf die Stirnfläche der Radnabe 10, sondern an dieser vorbei unmittelbar auf die Radnabe selbst auftreffen. Ihre Funktion entspricht derjenigen der Originallöseschrauben 28 nach Fig. 1, um die Klemmverbindung wieder zu lösen. In der Fig. 3 sind die Löseschrauben 44 nach Fig. 2 nicht zu erkennen, jedoch in Fig. 4, die außerdem zeigt, daß die der Radnabe zugelegenen Enden der Löseschrauben 44 jeweils mit einer Schulter 46 ausgerüstet sind, gegen die jeweils eine Scheibe 48 über einen Splint 50 in einer Bohrung 52 gehalten ist.

Die Figuren 1 und 2 lassen außerdem noch erkennen, daß die Platte 32 mit zwei Einstellbohrungen 54 und 56 versehen ist. Diese liegen oberhalb der Bohrung 40 für die Befestigungsschraube 24, und die radial am weitesten außen liegende Einstellbohrung 56 findet eine Verwendung, wenn ein Fahrzeug mit einer Zwillingsbereifung eingesetzt wird. Bei Fahrzeugen mit Einfachbereifung wird die untere Einstellbohrung 54 benutzt. Die Einstellbohrungen nehmen das eine Ende 58 einer Einstellschraube 60 auf, das durch die jeweilige Bohrung 54 oder 56 hindurchgeführt ist. Die Einstellschraube 60 ist nahe ihrem Ende 58 mit einer Schulter 62 ausgerüstet, gegen die eine erste Scheibe 64, ein Abstandshalter 66 und eine zweite Scheibe 68 über eine Mutter 70 gehalten werden. Die Scheiben 64 und 68 liegen beiderseits der Platte 32, und der Abstandshalter 66 befindet sich in einer der Einstellbohrungen 54 oder 56. Die Mutter 70 ist auf das Ende 58 der Einstellschraube 60 aufgeschraubt, das hierzu zweckmäßig mit Linksgewinde versehen ist, während das Gewinde der Einstellschraube 60 Rechtsgewinde aufweist. In jedem Fall sind die Gewinde an der Einstellschraube gegenläufig.

Ein Ausleger 72 ist an das Ende 18 der Radachse 12 über eine Schraube 74 angeschlossen, die in eine Bohrung 76 eingeschraubt ist. Diese wurde in die Radachse 12 eingebohrt und ist die einzige Änderung, die an der Ausführung nach Fig. 1 vorzunehmen ist, um die vorliegende Erfindung nutzen zu können. Bei einer Verwendung einer Zwillingsbereifung ist die Bohrung 76 schon nicht mehr erforderlich. Der Ausleger 72 weist noch eine mit Gewinde versehene Einstellbohrung 78 auf. Sie ist zu der Einstellbohrung 54 in der Platte 32 ausgerichtet und nimmt die Einstellschraube 60 auf. Der Durchmesser der Einstellbohrung ist vorzugsweise etwas größer als der des Abstandshalters 66, um kleinere Ungenauigkeiten, beispielsweise wenn die Teile nicht richtig zueinander ausgerichtet sind, ausgleichen zu können.

Um eine Spuränderung vornehmen zu können, wird das Fahrzeug zunächst hochgebockt. Danach sind die Befestigungsschrauben 24 zu lockern, aber normalerweise nicht zu entfernen. Sodann werden die Löseschrauben 28 angezogen, wodurch die Klemmverbindung der konischen Buchse 14 zwischen der Radnabe 10 und der Radachse 12 gelöst wird. Durch Drehen der Einstellschraube 60 in die eine oder die andere Richtung wird diese sich infolge ihres Gewindeeingriffs mit der Einstellbohrung 78 nach vorne oder hinten, d. h. axial in die korrespondierende Richtung bewegen. Erfolgt die Bewegung in Richtung auf das Ende 18 der Radachse 12 zu, wird die Scheibe 68 gegen die Platte 32 zur Anlage kommen, wodurch der Flanschteil 16a mit Bezug auf Fig. 3 über die Feststellschrauben 36 nach rechts gezogen wird. Der Flanschteil 16a wiederum zieht die Radnabe 10 mit dem verbleibenden Rad 8 in dieselbe Richtung. Bei einer Bewegung in die entgegengesetzte Richtung wird die Scheibe 64 gegen die Platte 32 drücken. Die Löseschrauben 44 in der Platte 32 ihrerseits drücken dann gegen die Radnabe 10 und schieben mit Bezug auf Fig. 3 nach links. Die zum Drehen der Einstellschraube 60 erforderlichen Kräfte können von einer Person leicht aufgebracht werden. Entsprechende Hilfsmittel erleichtern natürlich den Drehvorgang.

Wie bereits vorstehend an einigen Stellen angedeutet wurde, kann die Erfindung auch bei Fahrzeugen mit einer Zwillingsbereifung Verwendung finden. Die hierzu erforderlichen Maßnahmen sind in den Figuren 4 und 5 dargestellt. Bei einer Zwillingsbereifung sind auf einer Radachse 12 zwei Räder 8 und 8′ vorgesehen, wobei das axial außen liegende Rad 8 im wesentlichen dem nach Fig. 3 entspricht. Gleiches trifft zu für das innen liegende Rad mit Ausnahme der Radnabe 10′, die von der Radnabe 10 leicht abweicht. Außerdem sind bei der Ausführung nach der Fig. 5 noch Radgewichte 80 vorgesehen.

Aus den Figuren 4 und 5 geht nun hervor, daß die Platte 32 mit dem inneren Rad 8′ in genau derselben Weise wie das Rad 8 nach der Fig. 3 befestigt ist. Befestigungsschrauben 24′ erstrecken sich durch Flanschteile 16a′ in Befestigungslöcher 22′ in der Radnabe 10′. Die in Fig. 3 dargestellten Abstandshalter 38 sind bei dieser Ausführung nicht mehr erforderlich. Die Befestigung der Einstellschraube 60 in der Platte 32 ist insoweit unterschiedlich, als ihr Ende durch die obere Einstellbohrung 56 geführt ist.

Bei einer Ausführung mit Zwillingsbereifung kann auch auf den Ausleger 72 verzichtet werden, was als sehr wesentlich angesehen wird. Statt dessen wird eine der in Fig. 3 dargestellten Schrauben 82, die zur Befestigung einer Felge 84 an der Radnabe 10 durch Einschrauben in Bohrungen 86 dienen, entfernt und durch die Einstellschraube 60 ersetzt.

Zur Spurverstellung wird die Buchse 14 des äußeren Rades mit der äußeren Radnabe 10 und der Radachse 12 keilverspannt, wodurch die Radnabe 10 auf ihrem Platz auf der Radachse 12 gehalten wird. Befestigungsschrauben 24′ am inneren Rad 8′ werden gelockert, und Löseschrauben 44 werden angezogen, wodurch sich die reibschlüssige Keilverbindung über die konische Buchse des inneren Rades löst. Das innere Rad 8′ kann durch Drehen der Einstellschraube 60 in irgendeine Richtung auf der Radachse 12 verschoben werden. Ist die richtige Einstellstellung erreicht, werden die Löseschrauben 44 gelockert und die Befestigungsschrauben 24′ am inneren Rad 8′ wieder angezogen, so daß die reibschlüssige Keilverbindung zwischen der inneren Radnabe 10′ und der Radachse 12 über die Buchse wieder entsteht. Um nun auch das äußere Rad einstellen zu können, bleibt die reibschlüssige Keilverbindung am inneren Rad 8′ erhalten, und die Befestigungsschrauben am äußeren Rad 8 werden gelockert. Die in Fig. 5 nicht dargestellten Löseschrauben 28 werden angezogen, um die Keilverbindung am äußeren Rad aufzuheben. Durch Drehen der Einstellschraube 60 wird dann das äußere Rad auf der Radachse 12 verstellt. Nach Erreichen der richtigen Einstellstellung werden die Löseschrauben 28 wieder gelöst und die Befestigungsschrauben 24 angezogen. Das äußere Rad ist wieder betriebssicher mit seiner Radachse verbunden.

Die Verwendung einer der Bohrungen 86 für die Einstellschraube 60 erübrigt die Anwendung eines Auslegers. Beide Räder übernehmen die Funktion des Auslegers nach Fig. 3.

**Ansprüche**

1. Vorrichtung zur Verstellung der Spurweite eines Fahrzeuges, insbesondere eines Ackerschleppers, mit mindestens einem auf einer Radachse (12) verstellbaren Rad (8, 8′), einer Radnabe (10, 10′) und einer konisch ausgebildeten und geteilten Buchse (14, 14′), die auf der Radachse (12) axial verschiebbar ist und mit ihren konisch ausgebildeten Mantelflächen (14a, 14b, 14a′, 14b′) in die entsprechend ausgebildete Bohrung der Radnabe (10, 10′) derart einschiebbar ist, daß zwischen Radnabe (10, 10′) und Radachse (12) eine reibschlüssige Klemmverbindung entsteht, dadurch gekennzeichnet, daß mit der Buchse (14, 14′) eine wenigstens eine Einstellbohrung (54, 56) aufweisende Platte (32) verbunden und eine parallel oder im wesentlichen parallel zur Radachse (12) verlaufende Einstellschraube (60) vorgesehen ist, die einenends mit der Platte (32) über deren Einstellbohrung (54, 56) drehbar und axial im wesentlichen unverschiebbar verbunden und anderenends in einen mit der Radachse (12) verbindbaren Radialteil einschraubbar ist.

2. Vorrichtung nach Anspruch 1, dadurch gekennzeichnet, daß die Platte (32) Löseelemente zum Herausziehen der konisch ausgebildeten Buchse (14, 14′) aus der Bohrung der Radnabe (10, 10′) aufweist.

3. Vorrichtung nach Anspruch 1, dadurch gekennzeichnet, daß die Platte (32) mit wenigstens einer Innengewinde aufweisenden Lösebohrung (42) zur Aufnahme einer Löseschraube (44) versehen ist, die derart in der Platte (32) angeordnet ist, daß die Löseschraube (44) an der konischen Buchse (14, 14′) vorbeigeführt ist.

4. Vorrichtung nach Anspruch 3, dadurch gekennzeichnet, daß die Platte (32) mit zwei Lösebohrungen (42) verse hen ist und jede Löseschraube (44) gegen Herausdrehen aus ihrer Lösebohrung (42) gesichert ist.

5. Vorrichtung nach einem oder mehreren der vorherigen Ansprüche, dadurch gekennzeichnet, daß die Einstellschraube (60) an ihrem durch die Einstellbohrung (54, 56) geführten Ende (58) mit einer Schulter (62) versehen ist, gegen die eine Scheibe (64), die an einer Seite der Platte (32) vorgesehen ist, anliegt, wobei an der anderen Seite der Platte (32) auf der Einstellschraube (60) eine weitere über eine Mutter (70) gesicherte Scheibe (68) und zwischen beiden Scheiben (64, 68) ein sich durch die Einstellbohrung (54) erstreckender Abstandshalter (66) vorgesehen ist.

6. Vorrichtung nach einem oder mehreren der vorherigen Ansprüche, dadurch gekennzeichnet, daß die Einstellschraube (60) mit gegenläufigen Gewinden versehen ist.

7. Vorrichtung nach einem oder mehreren der vorherigen Ansprüche, dadurch gekennzeichnet, daß die Platte (32) mit der konischen Buchse (14, 14') verschraubt ist und zwischen Platte (32) und Buchse (14, 14') auf den Feststellschrauben (36) Abstandshalter (38) vorgesehen sind.

8. Vorrichtung nach einem oder mehreren der vorherigen Ansprüche, dadurch gekennzeichnet, daß die konische Buchse (14, 14') mit der Radnabe (10, 10') über in letztere einschraubbare Befestigungsschrauben (24) verklemmbar ist und die Platte (32) mindestens eine Bohrung (40) mit großem Durchmesser aufweist, um den Zugang zu dem Kopf einer Befestigungsschraube (24) zu erleichtern.

9. Vorrichtung nach Anspruch 1, dadurch gekennzeichnet, daß der Radialteil die Radnabe eines zweiten Rades ist.

10. Vorrichtung nach Anspruch 1, dadurch gekennzeichnet, daß der Radialteil als mit der Stirnseite der Radachse (12) verschraubter Ausleger (72) ausgebildet ist, der an seinem oberen Ende eine mit Gewinde versehene Einstellbohrung (78) für die Einstellschraube (60) aufweist.

Fig. 1

*Fig. 2*

*Fig. 4*

8

**Fig. 3**

EP 0 421 281 A1

**Fig. 5**

EP 0 421 281 A1

**Europäisches Patentamt**

# EUROPÄISCHER RECHERCHENBERICHT

Nummer der Anmeldung

## EP 90 11 8623

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | FR-A-1 192 621 (STAUB) <br> * Seite 1, rechte Spalte, Zeile 13 - Seite 2, rechte Spalte, Zeile 9; Figuren 1-4 * <br> — — — | 1,5,10 | B 60 B 35/10 <br> F 16 D 1/08 |
| Y,A | US-A-2 554 348 (RUDOLPH) <br> * Spalte 5, Zeile 40 - Spalte 6, Zeile 52; Figuren 6-8 * <br> — — — | 1,2,4,8,7 | |
| Y | US-A-3 279 831 (SMELCER) <br> * Spalte 2, Zeile 28 - Spalte 3, Zeile 30; Figuren 1, 2 * <br> — — — | 1,2,4,8 | |
| A | US-A-2 570 604 (SIEGERIST) <br> * Spalte 2, Zeile 24 - Spalte 4, Zeile 3; Figuren 1-9 * <br> — — — | 2 | |
| A | FR-A-1 269 806 (STAUB) <br> * Seite 1, rechte Spalte, Zeilen 3 - 32; Figuren 1, 2 * <br> — — — — — | 1 | |

**RECHERCHIERTE SACHGEBIETE (Int. Cl.5)**

B 60 B
F 16 D

Der vorliegende Recherchenbericht wurde für alle Patentansprüche erstellt

| Recherchenort | Abschlußdatum der Recherche | Prüfer |
|---|---|---|
| Den Haag | 07 Januar 91 | AYITER I. |